# EUROPÄISCHE PATENTANMELDUNG

(11) **EP 3 656 827 A2**
(43) Veröffentlichungstag der Anmeldung: **27.05.2020**
(21) Anmeldenummer: 19207426.8
(22) Anmeldetag: 06.11.2019
(51) Int. Cl.: C09J 5/06, B30B 15/06

(54) **VERFAHREN ZUM FÜGEN ZWEIER FÜGETEILE UNTER VERWENDUNG EINES FLÄCHENSTRAHLERS SOWIE FÜGEVORRICHTUNG**

(30) Priorität: 26.11.2018 DE 102018129802
(71) Anmelder: Manz AG, 72768 Reutlingen (DE)
(72) Erfinder: SCHMIEDER, Benjamin, 70178 Stuttgart (DE); WALTER, Dmitrij, 72655 Altdorf (DE); Kirsch, Marvin, 72762 Reutlingen (DE); FREUNDT, Martin, 73732 Esslingen (DE)
(74) Vertreter: Kohler Schmid Möbus Patentanwälte

(57) **Zusammenfassung**

Die Erfindung betrifft ein Verfahren (100) zum Fügen eines ersten Fügeteils (12), insbesondere eines Deckglases, mit einem zweiten Fügeteil (14), insbesondere einem Gehäuse und/oder einer Anzeigeschicht einer Deckglas-Display-Baugruppe, wobei die beiden Fügeteile (12, 14) mittels eines thermosensitiven Klebemittels (16) miteinander verbunden werden und wobei das Klebemittel (16) mittelbar und/oder unmittelbar durch Bestrahlen mit Licht (20) einer Lichtquelle (22), insbesondere mit Infrarotlicht und/oder sichtbarem Licht, zur Herstellung der Fügeverbindung erwärmt wird, wobei als Lichtquelle (22) ein Flächenstrahler verwendet wird. Des Weiteren betrifft die Erfindung eine Fügevorrichtung (28). Die Erfindung ermöglicht ein schnelles und sicheres Fügen der Fügeteile (12, 14).

## Beschreibung

Die Erfindung betrifft ein Verfahren zum Fügen eines ersten Fügeteils, insbesondere eines Deckglases, mit einem zweiten Fügeteil, insbesondere einem Gehäuse und/oder einer Anzeigeschicht einer Deckglas-Display-Baugruppe, beispielsweise eines Smartphones, eines mobilen Computers oder dergleichen,
- wobei die beiden Fügeteile mittels eines thermosensitiven Klebemittels miteinander verbunden werden und
- wobei das Klebemittel mittelbar und/oder unmittelbar durch Bestrahlen mit Licht einer Lichtquelle, insbesondere mit Infrarotlicht und/oder sichtbarem Licht, zur Herstellung der Fügeverbindung erwärmt wird.

Smartphones, Wearables, mobile Computer wie beispielsweise Notebooks oder Tabletcomputer und dergleichen weisen üblicherweise eine Deckglas-Display-Baugruppe, beispielsweise als Teil einer berührungsempfindlichen Anzeigeeinheit, auf. Allgemein finden sich solche Deckglas-Display-Baugruppen (auch) bei Geräten zur außer-Haus-Verwendung und/oder bei Geräten zur Verwendung unter Wasser wie beispielsweise (wasserfesten) Uhren, Trackern und/oder Messgeräten, insbesondere Tachometern.

Bei einer solchen Baugruppe ist ein Deckglas mit einem Gehäuse und/oder mit einer Anzeigeschicht des betreffenden Gerätes verbunden, insbesondere mit diesem bzw. diesen verklebt. Die Klebung verläuft insbesondere entlang eines Kantenbereichs des betreffenden Gerätes.

Eine vergleichbare Situation besteht ferner beispielsweise auch bei KFZ-Rückspiegeln, insbesondere Innenraumrückspiegeln oder Außenrückspiegeln, insbesondere mit Leuchtflächen, sowie bei Kameras und dergleichen.

Dazu wird ein Klebemittel in eine Fügezone zwischen dem Deckglas und dem Gehäuse bzw. der Anzeigeschicht, insbesondere entlang deren umlaufenden Kanten, eingebracht.

In der jüngsten Zeit finden hierfür neben sogenannten Pressure Activated Adhesives (PSA) vermehrt auch, insbesondere thermoplastische, laseraktivierbare Klebemittel (LAK) als auch thermisch aktivierbare Klebefilme mit vernetzenden Bestandteilen (TAK) als Klebemittel Verwendung. Insbesondere LAK als auch TAK benötigen sowohl Wärme als auch Druck, um die jeweils gewünschten Fügeverbindungseigenschaften auszubilden.

Die Erwärmung solcher thermosensitiver Klebemittel kann durch Bestrahlen mit Licht, insbesondere mittels eines Lasers bzw. eines Laserscanners, erfolgen. Zur Optimierung der Absorption des Lichts kann in der Fügezone eine Farbstoffschicht ausgebildet sein. Diese Farbstoffschicht wird durch das eingestrahlte Licht erwärmt. Durch Wärmeleitung wird die Wärme an das an die Farbstoffschicht angrenzende Klebemittel weitergeleitet, wodurch sich auch dieses erwärmt.

Eine solche Erwärmung ist jedoch sehr zeitaufwändig. Zwar kann prinzipiell das Klebemittel durch höhere Leistungen des Lasers bzw. höhere Intensitäten des Laserlichts schneller erwärmt werden, dabei besteht jedoch das Risiko einer Überhitzung und damit insbesondere das Risiko einer Schädigung oder Zerstörung beispielsweise der Farbstoffschicht. Zudem entstehen durch Wärmeleitungseffekte erhebliche thermische Streuverluste.

Ferner können auch an die Fügeteile angrenzende Komponenten, beispielsweise elektronische Bauelemente, durch die thermischen Streuverluste geschädigt werden.

Aufgabe der vorliegenden Erfindung ist es daher, ein Verfahren sowie eine Vorrichtung zum Fügen eines ersten Fügeteils mit einem zweiten Fügeteil mittels eines thermosensitiven Klebemittels anzubieten, die ein sicheres und gleichzeitig schnelles Fügen der beiden Fügeteile ermöglichen.

Gelöst wird die Aufgabe durch ein Verfahren zum Fügen eines ersten Fügeteils, insbesondere eines Deckglases, mit einem zweiten Fügeteil, insbesondere einem Gehäuse und/oder einer Anzeigeschicht einer Deckglas-Display-Baugruppe, beispielsweise eines Smartphones, eines mobilen Computers oder dergleichen,
- wobei die beiden Fügeteile mittels eines thermosensitiven Klebemittels miteinander verbunden werden und
- wobei das Klebemittel mittelbar und/oder unmittelbar durch Bestrahlen mit Licht einer Lichtquelle, insbesondere mit Infrarotlicht und/oder sichtbarem Licht, zur Herstellung der Fügeverbindung erwärmt wird,
- wobei als Lichtquelle ein Flächenstrahler verwendet wird.

Dabei kann unter einem Flächenstrahler eine Lichtquelle verstanden werden, die eingerichtet ist, das oder die miteinander zu fügenden Fügeteile flächig zu bestrahlen. Unter einem Flächenstrahler kann somit eine Lichtquelle verstanden werden, deren Lichtbild auf einer zu beleuchtenden Oberfläche - anders als beispielsweise bei einem herkömmlichen Laser üblich - nicht oder zumindest nicht im Wesentlichen punktförmig geformt ist. Insbesondere kann die Größe ihres Lichtbildes der Größe des Fügebereichs bzw. einer Fügezone oder zumindest im Wesentlichen der Größe des Fügebereichs bzw. der Fügezone oder zumindest eines wesentlichen Teils des Fügebereichs bzw. der Fügezone entsprechen.

Indem als Lichtquelle ein Flächenstrahler verwendet wird, kann eine hohe Licht- bzw. Wärmeleistung auf bzw. in die zu fügenden Fügeteile bei dennoch geringer Intensität, d. h. trotz geringer Leistung pro Flächeneinheit, übertragen werden. Durch die geringe Intensität reduziert sich das Risiko einer Schädigung beispielsweise einer Farbstoffschicht. Die Farbstoffschicht kann großflächig erwärmt werden, so dass sich auch das Klebemittel großflächig erwärmen lässt.

Durch die insgesamt höhere Wärmeleistung kann die Prozesszeit reduziert werden. Wärmeverluste durch Wärmeleitung können minimiert werden. Anders als beispielsweise bei Erwärmen einer Außenseite der Baugruppe durch beispielsweise einen beheizbaren Fügestempel, kann die Wärme unmittelbar in die Fügezone eingebracht werden. Die zu fügenden Fügeteile können somit geschont werden.

Während beispielsweise bei Verwendung eines herkömmlichen, punktförmig einwirkenden Lasers durch dessen hohe Intensität des Laserlichts ein erhöhtes Risiko lokaler Überhitzungen, insbesondere der Farbstoffschicht, besteht, können bei Verwendung eines Flächenstrahlers derartige lokale Überhitzungen vermieden werden. Insbesondere können auch gekrümmte Oberflächen be- bzw. durchstrahlt werden, ohne dass durch Linseneffekte der Oberfläche lokal kritische Intensitätsgrenzen des Lichts erreicht oder überschritten werden.

Auch kann das Lichtbild der Lichtquelle auf die jeweiligen Erfordernisse und Eigenschaften der Fügeteile, beispielsweise an ihre Form, angepasst werden. So ist denkbar, das Lichtbild der Lichtquelle auf den räumlichen Verlauf des Klebemittels anzupassen.

Empfindliche Elemente außerhalb des Fügebereichs können vor unerwünschter Erwärmung geschützt werden.

Durch die flächige Bestrahlung kann auf eine aufwändige und damit kostenintensive Mechanik wie sie beispielsweise ein Laserscanner erfordert, verzichtet werden.

Dazu kann vorgesehen sein, dass als Lichtquelle eine Streifenlichtquelle verwendet wird. Unter einer Streifenlichtquelle kann eine Lichtquelle verstanden werden, die ein im Wesentlichen rechteckiges, insbesondere ein streifen- oder linienförmiges, Lichtbild produziert. Die Lichtquelle kann als stationäre Beleuchtung ausgebildet sein. Alternativ oder ergänzend kann die Lichtquelle ausgebildet sein, einen zu beleuchtenden Bereich zu überfahren. Die Lichtquelle kann ausgebildet sein, auf den zu beleuchtenden Bereich eine vordefinierte Energiemenge zu strahlen. Dazu kann die Lichtquelle, beispielsweise wenn das Klebemittel ein LAK ist, ferner eingerichtet sein, ihre Bestrahlungsintensität und/oder ihre Überfahrgeschwindigkeit beim Überfahren des zu beleuchtenden Bereichs, insbesondere in Abhängigkeit von der jeweiligen (lokalen) Breite des Bereichs, zu variieren.

Insbesondere bei Smartphones, Tabletcomputern und dergleichen sind die zu verarbeitenden Deckglas-Display-Baugruppen oftmals rechteckig oder zumindest im Wesentlichen rechteckig. Ist somit die Lichtquelle als Streifenlichtquelle ausgebildet, so kann die Lichtquelle bzw. das Lichtbild der Lichtquelle auf einen Bereich entlang einer der Kanten der Fügeteile gerichtet werden. Weist die Lichtquelle mehrere Streifenlichtquelle auf, so können mehrere der Kanten gleichzeitig abgedeckt werden.

Denkbar ist, dass das erste Fügeteil, das zweite Fügeteil und/oder deren Fügezone mit Licht mit einer Lichtintensität, insbesondere als Pulsspitzenintensität ermittelt, von höchstens 10 W/mm², vorzugsweise von höchstens 1 W/mm², bestrahlt werden. Dadurch können bei üblichen Deckglas-Display-Baugruppen und den dort üblicherweise verwendeten Farbstoffschichten Überhitzungen vermieden werden. Insbesondere kann die Lichtintensität im Vergleich zu einer Punktstrahlquelle durch das flächige Bestrahlen beispielsweise unter ein materialspezifisches Prozesslimit reduziert werden. Alternativ oder ergänzend kann die Prozessgeschwindigkeit gesteigert werden. Allgemein ist denkbar, dass die Lichtintensität in Abhängigkeit des Materials einer oder mehrerer das Licht absorbierender Schichten, insbesondere in Abhängigkeit von der Farbstoffschicht, gewählt ist.

Als Klebemittel können insbesondere ein Thermoplast, ein Stoff mit vernetzenden Bestandteilen und/oder ein einen solchen Stoff aufweisender Klebstoff verwendet werden. Der Thermoplast kann beispielsweise ein LAK sein. Insbesondere kann der Thermoplast mehrmalig schmelzbar sein. Der Stoff mit vernetzender Zusammensetzung kann ein TAK sein. Insbesondere kann der Stoff mit vernetzender Zusammensetzung, beispielsweise durch erhöhte Hitzeeinwirkung, einmalig aktivierbar sein. Derartige Klebemittel erfordern unter anderem kontrollierte bzw. kontrollierbare Wärme- bzw. Temperaturbedingungen, die bei Einsatz des erfindungsgemäßen Verfahrens erfüllt werden können.

Da lokale Überhitzungen durch das erfindungsgemäße Verfahren vermieden werden können, kann eine das Licht absorbierende oder zumindest teilweise absorbierende Farbstoffschicht, insbesondere zur Erwärmung des Klebemittels, bestrahlt werden. Durch die Farbstoffschicht kann die Absorption des eingestrahlten Lichts, insbesondere innerhalb der Fügezone, verbessert werden. Die Farbstoffschicht kann eine Tinte sein, eine Tinte aufweisen und/oder mithilfe einer Tinte hergestellt sein. Die Farbstoffschicht kann für sichtbares Licht intransparent oder zumindest im Wesentlichen intransparent sein. Dann ergibt sich ein zusätzlicher Sichtschutz, so dass die unter der Farbstoffschicht befindlichen Schichten von der Außenseite aus nicht sichtbar bzw. durch die Farbstoffschicht verdeckt sind. Alternativ oder ergänzend können durch die Farbstoffschicht, beispielsweise bei einer herzustellenden Deckglas-Display-Baugruppe eines Geräts, beispielsweise eines Smartphones, ein oder mehrere Bereiche, die für einen Benutzer des Geräts nicht sichtbar sein sollen, optisch verdeckt sein.

Denkbar ist auch, dass als Lichtquelle wenigstens zwei Einzellichtquellen, beispielsweise wenigstens zwei LED, verwendet werden. Somit lässt sich ein leistungsstarker Flächenstrahler aus kostengünstigen Einzelbauteilen herstellen. Denkbar ist auch, dass wenigstens eine Einzellichtquelle als Infrarotstrahler, insbesondere mit einer Fokussierungsvorrichtung, ausgebildet ist und/oder einen solchen aufweist. Alternativ oder ergänzend kann wenigstens eine Einzellichtquelle als Laser, insbesondere mit geringer Strahlleistung und vorzugsweise mit einer Strahlformungsvorrichtung, ausgebildet sein und/oder einen solchen aufweisen.

Als Lichtquelle kann eine Matrixlichtquelle, insbesondere ein VCSEL (Vertical-Cavity Surface-Emitting Laser)-Array, verwendet werden. VCSEL-Arrays weisen eine Vielzahl matrixförmig angeordneter, flächenabstrahlender Einzellichtquellen auf. Durch diese lässt sich ein besonders homogenes, flächiges Lichtbild kostengünstig erzeugen. Es können hohe Lichtleistungen, insbesondere im Bereich von 100W - 10 kW, erzeugt werden.

Auch bieten VCSEL-Arrays die Möglichkeit, die Einzellichtquellen des Arrays separat voneinander anzusteuern. Somit kann schon bei Erzeugung, d. h. innerhalb der Lichtquelle, eine auf die Form der Fügezone bzw. des Klebemittels angepasste Lichtverteilung erzeugt werden.

Das Licht kann entlang seines Strahlengangs durch eine Maskierungsvorrichtung maskiert werden. Dadurch lässt sich das Lichtbild noch präziser an die Form bzw. den Verlauf der Fügezone anpassen. Empfindliche Bereiche der Baugruppe oder daran angrenzender Elemente können abgeschattet und damit geschützt werden.

Insbesondere kann das Verfahren vorsehen, dass die Größe und/oder die Position eines Maskierungsfensters der Maskierungsvorrichtung eingestellt werden. Dazu kann die Maskierungsvorrichtung formveränderbar ausgebildet sein. Insbesondere kann die Maskierungsvorrichtung aus vier relativ zueinander verschiebbar angeordneten, insbesondere rechteckförmigen Schlitzmasken bestehen. Durch eine solche Maskierungsvorrichtung kann eine Rechteckmaskierung in einstellbarer Größe erfolgen. Alternativ oder ergänzend können, insbesondere anwendungsspezifisch geformte, Radien- bzw. Krümmungsmaskierungselemente zur Maskierung einer oder mehrerer kurvenförmig begrenzter Bereiche vorgesehen sein.

Alternativ oder ergänzend kann auch die Lichtquelle, insbesondere relativ zum ersten und/oder zum zweiten Fügeteil, verschiebbar angeordnet sein.

Denkbar ist auch, dass der Strahlengang des Lichts durch eine Linsenanordnung und/oder durch eine Spiegelvorrichtung geformt und/oder gelenkt wird. Insbesondere wenn die Lichtquelle mehrere Einzellichtquellen aufweist, können dann die Einzellichtquellen räumlich verteilt angeordnet werden und dennoch ein kontinuierliches, insbesondere nahtloses, Lichtbild erzeugen.

Dazu ist es besonders günstig, wenn wenigstens einer, vorzugsweise jeder, Einzellichtquelle ein Teil und/oder ein Abschnitt der Linsenanordnung und/oder der Spiegelanordnung zugeordnet werden. Dies ermöglicht es, den Strahlengang des von der wenigstens einen bzw. von jeder Einzellichtquelle emittierten Lichts separat zu lenken und/oder zu formen.

Bei einer Variante des erfindungsgemäßen Verfahrens ist es vorgesehen, dass die Lichtquelle während des Fügens in wenigstens zwei verschiedenen Leistungsstufen betrieben wird. Alternativ oder ergänzend können beispielsweise die Einschaltdauer der Lichtquelle und/oder - insbesondere bei einem pulsweitenmodulierten Betrieb der Lichtquelle - ihre Pulsweite variiert werden.

Durch den Betrieb der Lichtquelle in wenigstens zwei verschiedenen Leistungsstufen ist es möglich, mit ein und derselben Lichtquelle mehrere Prozessphasen des Fügeprozesses zu bedienen. Auch können dadurch unterschiedliche Arten von Klebemitteln eingesetzt werden. Ist beispielsweise das Klebemittel ein TAK, so kann der Fügeprozess in zwei unterschiedlichen Stufen verlaufen. Beispielsweise kann in einer ersten Aufheizphase mit beispielsweise 1 W/mm² über einen Zeitraum von kleiner einer Sekunde ein bestimmtes Temperaturniveau eingestellt werden und in einer zweiten Aufheizphase in einem Zeitraum von ein oder mehreren Sekunden das Klebemittel auf ein höheres Temperaturniveau aufgeheizt werden. Anschließend kann in einer Nachheizphase durch Bestrahlen mit einer reduzierten Leistung die Temperatur in der Fügezone in etwa gehalten werden.

Auch kann wenigstens eine Einzellichtquelle mit einer höheren Einzellichtleistung betrieben werden als wenigstens eine andere Einzellichtquelle. Dazu kann die Lichtquelle eingerichtet sein, eine einstellbare Lichtverteilung zu erzeugen. Auch hierdurch kann die Lichtverteilung vorab an die Form des zu erwärmenden Klebematerials bzw. der Fügezone angepasst werden. Beispielsweise können Einzellichtquellen, die in einem mittleren Bereich der Lichtquelle angeordnet sind, mit einer geringeren Leistung betrieben werden, um eine Lichtverteilung zu erhalten, die im Wesentlichen entlang von Kantenbereichen der Fügeteile strahlt und/oder - beispielsweise bei einem länger währenden Fügeprozess - bauteilspezifische Wärmeabflüsse berücksichtigt.

Um dauerhafte Fügeverbindung zu erhalten, kann es vorgesehen sein, dass die beiden Fügeteile vor, während und/oder nach dem Bestrahlen mit Licht, insbesondere mit einem Fügestempel, besonders bevorzugt mit einem verformbaren Fügestempel, gegeneinander gepresst werden.

Dazu kann die verwendete Fügevorrichtung einen, insbesondere verformbaren, Fügestempel aufweisen. Der Fügestempel kann gegen ein Fügeteil, beispielsweise gegen das erste Fügeteil pressen, während das andere, beispielsweise das zweite, Fügeteil auf einem Werkstückträger gelagert ist. Der Werkstückträger kann verformbar ausgebildet sein. Insbesondere kann der Werkstückträger ausgebildet sein, sich an die Form des von ihm getragenen Werkstücks, insbesondere des zweiten Fügeteils, anzupassen. Die Fügevorrichtung kann dazu beispielsweise mehrere Fügestempel aufweisen. Beispielsweise kann jedes Fügeteil von einem ihm zugeordneten Fügestempel gegen das jeweils andere Fügeteil gepresst werden. Die Fügestempel können in ihrer Form und/oder in der Verteilung der von ihnen erzeugten Drücke auf die jeweils zu fügenden Fügeteile anpassbar ausgebildet sein.

In den Rahmen der Erfindung fällt des Weiteren eine Fügevorrichtung, insbesondere zur Durchführung des erfindungsgemäßen Verfahrens, zum Fügen eines ersten Fügeteils, insbesondere eines Deckglases, mit einem zweiten Fügeteil, insbesondere einem Gehäuse und/oder einer Anzeigeschicht einer Deckglas-Display-Baugruppe, beispielsweise eines Smartphones, eines Wearable, eines mobilen Computers oder dergleichen, mittels eines thermosensitiven Klebemittels, mit einer Lichtquelle zum unmittelbaren und/oder mittelbaren Erwärmen des Klebemittels durch Bestrahlen des Klebemittels mit Licht, insbesondere mit Infrarot- und/oder sichtbarem Licht, wobei die Lichtquelle als Flächenstrahler, insbesondere als VCSEL-Array, ausgebildet ist.

Die Fügevorrichtung kann einen, insbesondere verformbaren, Fügestempel zum Gegeneinanderpressen des ersten Fügeteils und des zweiten Fügeteils aufweisen.

Ein solcher verformbarer Fügestempel ergibt sich insbesondere, wenn der Fügestempel wenigstens ein mit einer Anpresskraft F beaufschlagbares Kraftaufnahmeteil und wenigstens zwei Anpressteile zur Druckbeaufschlagung des ersten Fügeteils aufweist, wobei die wenigstens zwei Anpressteile jeweils unabhängig voneinander relativ zum Kraftaufnahmeteil kippbeweglich am Fügestempel angeordnet und/oder ausgebildet sind.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine schematische Darstellung einer Fügevorrichtung mit einer Baugruppe mit zwei zu fügenden Fügeteilen als Querschnittsansicht;
- Fig. 2 bis 6: schematische Darstellungen von Fügevorrichtungen mit unterschiedlich gestalteten Strahlengängen;
- Fig. 7 und 8: schematische Seiten- und Frontansichten einer Fügevorrichtung mit einer Matrixlichtquelle;
- Fig. 9: eine schematische Seitenansicht einer weiter verbesserten Ausführungsform einer Fügevorrichtung;
- Fig. 10 und 11: schematische Draufsichten auf eine an die Form der zu fügenden Fügeteile anpassbaren Fügevorrichtung;
- Fig. 12 und 13: eine schematische Teil-Seitenansicht sowie eine Abwicklungsansicht auf eine weitere, an die Form der zu fügenden Fügeteile anpassbaren Fügevorrichtung;
- Fig. 14: eine schematische Querschnittsansicht eines Fügestempels einer Fügevorrichtung und
- Fig. 15: eine schematische Darstellung des erfindungsgemäßen Verfahrens.

Im Folgenden werden zur Erleichterung des Verständnisses der Erfindung für funktional sich entsprechende Elemente jeweils gleiche Bezugszeichen verwendet.

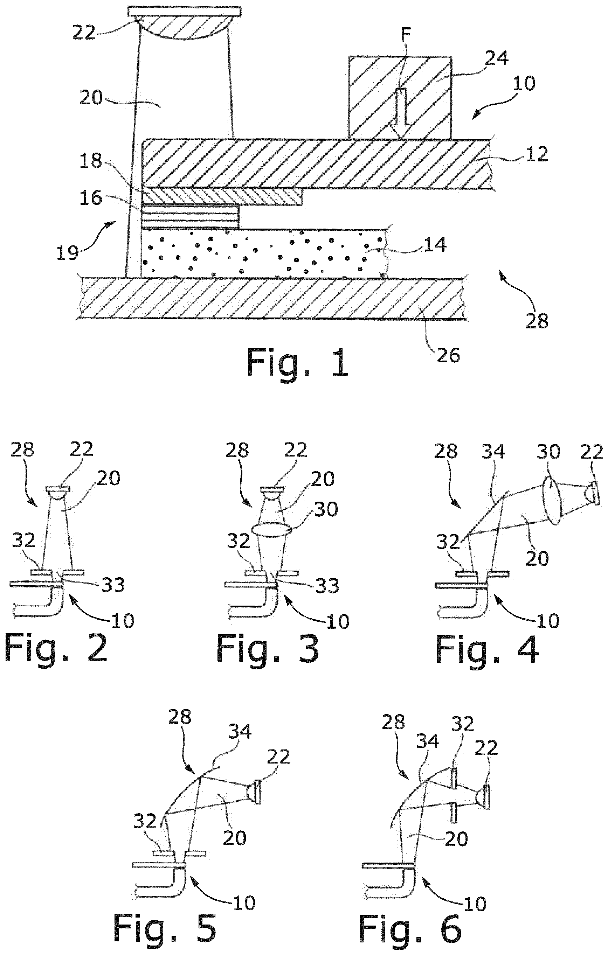

**In** **Fig. 1** ist zunächst eine Baugruppe **10** mit einem ersten Fügeteil **12** und einem zweiten Fügeteil 14 zu erkennen. Dabei handelt es sich um eine Deckglas-Display-Baugruppe eines Smartphones. Insbesondere ist das erste Fügeteil 12 ein Deckglas des Smartphones. Das zweite Fügeteil 14 ist Teil eines Gehäuses des Smartphones. Die beiden Fügeteile 12, 14 sollen durch ein Klebemittel **16** miteinander verbunden werden. Das Klebemittel 16 ist ein TAK.

Unterseitig des ersten Fügeteils 12 und angrenzend an das Klebemittel 16 ist eine Farbstoffschicht **18** aufgebracht. Das Klebemittel 16 und die Farbstoffschicht 18 befinden sich somit in einer Fügezone **19.**

Während das erste Fügeteil 12 für Licht in Wellenlängenbereichen sichtbaren Lichts und nahen Infrarots, insbesondere im Bereich 800 - 1100 nm weitgehend transparent ist, ist die Farbstoffschicht 18 für diese Wellenlängenbereiche intransparent. Sie absorbiert somit Licht aus diesen Wellenlängenbereichen.

Licht **20,** insbesondere in den genannten Wellenlängenbereichen, kann durch eine als Streifenlichtquelle ausgebildete Lichtquelle **22** erzeugt und in Richtung der Baugruppe 10 abgestrahlt werden. Die Lichtquelle 22 erzeugt insbesondere ein streifenförmiges Licht. Dazu ist die Lichtquelle 22 als VCSEL-Array ausgebildet. Die von ihr erzeugte Lichtleistung als auch die abgestrahlte Lichtverteilung können eingestellt werden.

Zu erkennen ist, dass zum Fügen der beiden Fügeteile 12, 14 das Licht 20 durch das erste Fügeteil 12 hindurchtritt und von der Farbstoffschicht 18 absorbiert wird. Die Farbstoffschicht 18 erwärmt sich und damit auch das Klebemittel 16. Alternativ ist auch denkbar, dass auf die Farbstoffschicht 18 verzichtet wird. In einem solchen Fall ist es günstig, wenn wenigstens eine unter der Farbstoffschicht 18 liegende Schicht, beispielsweise das Klebemittel 16, eingerichtet ist, das Licht 20 zu absorbieren.

Über einen Fügestempel **24** kann das erste Fügeteil 12 mit einer Anpresskraft **F** gegen das zweite Fügeteil 14 gepresst werden. Dazu ist das zweite Fügeteil 14 auf einem Werkstückträger **26** fixiert. Der Werkstückträger 26 kann ortsfest angeordnet sein. Der Fügestempel 24 ist insbesondere ausgebildet, die Anpresskraft F gleichmäßig und flächig, d. h. über einen größeren Bereich des ersten Fügeteils 12 verteilt, zu übertragen.

Die Lichtquelle 22, der Fügestempel 24, sowie der Werkstückträger 26 sind Bestandteile einer Fügevorrichtung **28.** Die Fügevorrichtung 28 weist abgesehen von den genannten Teilen noch weitere Teile auf, die aus Vereinfachungsgründen in Fig. 1 nicht abgebildet sind. Insbesondere weist die Fügevorrichtung 28 eine Handhabungsvorrichtung auf, mit der die Fügeteile 12, 14 positioniert, insbesondere zur Verarbeitung in die Fügevorrichtung 28 eingelegt und aus dieser nach Abschluss eines Fügevorganges wieder herausgenommen werden können. Auch weist die Fügevorrichtung 28 eine Steuereinheit zur Steuerung der unterschiedlichen Komponenten auf. Insbesondere ist die Steuereinheit ausgebildet, dass erfindungsgemäße Verfahren mithilfe der Fügevorrichtung 28 durchzuführen. Die Fügevorrichtung 28 kann beispielsweise auch eine Maskierungsvorrichtung zur Feineinstellung der Belichtung aufweisen Sie kann ein oder mehrere, insbesondere optische, Sensorikeinheiten zur Erfassung einer Temperatur, beispielsweise der Temperatur eines oder beider Fügeteile, aufweisen. Wenigstens eine der Sensorikeinheiten kann in den Strahlengang des Lichts 20 eingespiegelt sein. Alternativ oder ergänzend kann wenigstens eine der Sensorikeinheiten entlang einer vom Strahlengang des Lichts 20 abweichenden optischen Strecke angeordnet sein. Beispielsweise kann die wenigstens eine Sensorikeinheit den Fügebereich von einer außerhalb des Strahlengangs des Lichts 20 befindlichen Blickposition aus überwachen. Auch kann die Fügevorrichtung eine Motorik- und/oder eine Sensorikeinheit zur, insbesondere aktiven, Ausrichtung der Maskierungsvorrichtung und/oder der Lichtquelle 22 relativ zum ersten und/oder zweiten Fügeteil 12, 14 aufweisen.

**Fig. 2** bis **Fig. 6** zeigen nun unterschiedliche Ausführungsformen von Fügevorrichtungen 28. Die Fügevorrichtungen 28 unterscheiden sich insbesondere durch den jeweiligen Verlauf der Strahlengänge des Lichts 20.

Bei der Ausführungsform gemäß **Fig. 2** wird das Licht 20 geradlinig von der Lichtquelle 22 bis zur zu belichtenden Baugruppe 10 geführt.

Zur Abschattung zu schützender Bereiche der Baugruppe 10 bzw. des Smartphones ist im Strahlengang des Lichts 20, insbesondere dicht oberhalb der Baugruppe 10, eine Maskierungsvorrichtung **32** angeordnet. Die Maskierungsvorrichtung 32 weist ein Maskierungsfenster **33** auf, durch das Licht 20 hindurchtreten kann. Das Maskierungsfenster 33 kann schlitzartig ausgebildet sein und/oder eine, insbesondere quer zur Bildebene der Fig. 2, variierende Schlitzbreite aufweisen.

Bei der Ausführungsform gemäß **Fig. 3****,** die weitgehend der Ausführungsform gemäß Fig. 2 entspricht, ist im Strahlengang des Lichts 20 zusätzlich eine Linsenanordnung **30** angeordnet, um Streuverluste zu reduzieren sowie um nicht zu erwärmende Bestandteile des Smartphones bzw. der Baugruppe 10 zu schonen. Die Linsenanordnung 30 entspricht in ihrem Querschnitt einer konvexen Linse. Sie ist - wie im Übrigen auch die Lichtquelle 22 - quer zur Bildebene der Fig. 3 länglich ausgebildet. Sie kann eingerichtet sein, das Licht 20, insbesondere entlang einer Längs- und/oder einer Querrichtung, zu versetzen, um beispielsweise Kollisionen im Bauraum unterschiedlicher Bestandteile, insbesondere der Fügevorrichtung 28, zu vermeiden.

Bei einer bevorzugten Ausführungsform der Erfindung kann sich ferner im Strahlengang des Lichts 20 eine, insbesondere für das Licht 20 transparente, Glasscheibe (in Fig. 1 bis Fig. 9 aus Vereinfachungsgründen nicht dargestellt) befinden. Mithilfe der Glasscheibe kann eine geschlossene Kontur um den Fügestempel 24 herum ausgebildet werden. Somit kann die Lichtquelle 22 bereits zu einer anderen zu fügenden Baugruppe 10, beispielsweise in dieser oder einer anderen Fügevorrichtung 28, zur Beleuchtung der anderen Baugruppe 10 verfahren werden, während der Fügestempel 24 noch für eine verbleibende Restanpressdauer bei der ersten Baugruppe 10 verbleibt. Somit lässt sich beispielsweise die Auslastung der Lichtquelle 22, insbesondere während Abkühlprozessen der Fügeteile 12, 14, steigern.

Die Fügevorrichtung 28 gemäß **Fig. 4** ist im Wesentlichen entsprechend der Fügevorrichtung 28 gemäß Fig. 3 aufgebaut. Im Unterschied zu jener weist diese Fügevorrichtung 28 jedoch zusätzlich eine Spiegelvorrichtung **34** auf, mit der der Lichtstrahl 20 winklig geführt wird. Somit lässt sich die Lichtquelle 22, beispielsweise in Abhängigkeit bauraumtechnischer Anforderungen, weitgehend frei positionieren. Die Spiegelvorrichtung 34 ist zwischen der Linsenanordnung 30 und der Maskierungsvorrichtung 32 angeordnet.

Bei der Ausführungsform der Fügevorrichtung 28 gemäß **Fig. 5** kann auf eine Linsenanordnung 30 (Fig. 4) verzichtet werden, da die Spiegelvorrichtung 34 als gekrümmter Spiegel ausgebildet ist. Die Spiegelvorrichtung 34 übernimmt somit sowohl Lenk- als auch Strahlformungsfunktionen.

Bei der Fügevorrichtung 28 gemäß **Fig. 6** befindet sich die Maskierungsvorrichtung 32 zwischen der Lichtquelle 22 und der Spiegelvorrichtung 34. Diese Anordnung der Maskierungsvorrichtung 32 bietet in einem Bereich einer Oberseite der Baugruppe 10 einen größeren Freiraum. Dieser zusätzliche Freiraum kann beispielsweise zur Anordnung des Fügestempels 24 (Fig. 1) genutzt werden.

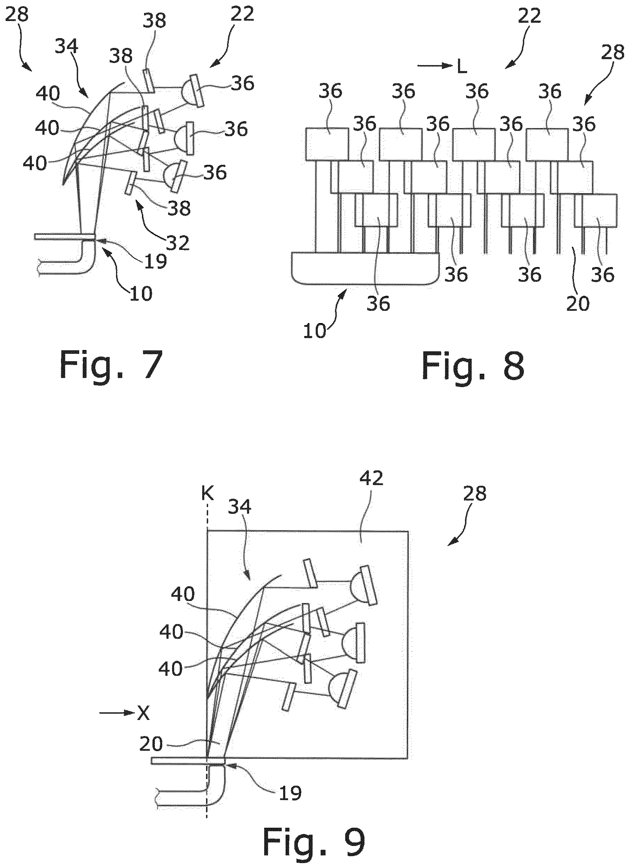

**Fig. 7** und **Fig. 8** zeigen schematische Ansichten einer weiteren Ausführungsform einer Fügevorrichtung 28, wobei Fig. 7 und Fig. 8 lediglich die zur Erläuterung wichtigen Teile der Fügevorrichtung 28 zeigen. Dabei zeigt Fig. 7 eine schematische Seitenansicht der Fügevorrichtung 28 und Fig. 8 eine schematische Frontansicht der Lichtquelle 22 der Fügevorrichtung 28.

Bei dieser Ausführungsform ist die Lichtquelle 22 aus mehreren Einzellichtquellen **36** gebildet. Die Einzellichtquellen 36 sind dabei regelmäßig, insbesondere flächig verteilt, angeordnet. Durch diese Anordnung ist es möglich - wie in Fig. 8 erkennbar - ein nahezu nahtloses Lichtbild mit weitgehend homogener Lichtverteilung des Lichts 20 zu erzeugen.

Um diese Anordnung der Einzellichtquellen 36 bauraumtechnisch zu ermöglichen, sind die Maskierungsvorrichtung 32 sowie die Spiegelvorrichtung 34 jeweils aus einer Vielzahl von Einzelelementen aufgebaut. Insbesondere sind jeder Einzellichtquelle 36 eine Einzelmaske **38** sowie eine Einzelspiegelfläche **40** zugeordnet bzw. im jeweiligen Strahlengang der jeweiligen Einzellichtquelle 36 angeordnet. Jede Einzelmaske 38 begrenzt bzw. maskiert somit den Strahlengang der ihr jeweils zugeordneten Einzellichtquelle 36. In diesem Ausführungsbeispiel sind die Einzelmasken 38 dazu jeweils zweiteilig ausgebildet, so dass zwischen ihren Einzelmaskenteilen jeweils ein schlitzförmiges Maskierungsfenster ausgebildet ist. Denkbar ist jedoch auch, die Einzelmasken 38 einteilig mit einem, insbesondere schlitzförmigen, vorzugsweise zentriert angeordneten, Maskierungsfenster auszubilden.

Insbesondere wird durch die Einzelelemente 38, 40 erreicht, dass alle Einzellichtquellen 36 - nahezu ohne Streuverluste - in die Baugruppe 10 bzw. in die Fügezone 19 strahlen.

Anhand von Fig. 8 ist erkennbar, dass die Lichtquelle 22 entlang ihrer Längsrichtung L über die Baugruppe 10 hinausragt. Zur Anpassung der Lichtverteilung an die zu fügenden Fügeteile 12, 14 der Baugruppe 10 können daher die Einzellichtquellen 36, die über die Baugruppe 10 hinausragen bzw. in Längsrichtung L überstehen, mit einer geringeren Leistung bzw. allgemein mit einer anderen Leistung, betrieben werden als diejenigen Einzellichtquellen 36, die unmittelbar über der Baugruppe 10 angeordnet sind.

Eine Weiterentwicklung der Fügevorrichtung 28 gemäß Fig. 7 bzw. Fig. 8 zeigt **Fig. 9****.**

Zu erkennen ist insbesondere, dass die Spiegelvorrichtung 34 mit ihren Einzelspiegelflächen 40 entlang einer horizontalen Richtung **x** bis höchstens an eine Kante **K** der Fügezone 19 heranreicht. Mit anderen Worten steht die Spiegelvorrichtung 34 nicht über die Kante K heraus.

Dazu sind die Einzelspiegelflächen 40 geeignet gekrümmt, insbesondere im Vergleich zu Fig. 7 stärker gekrümmt.

Wie im Folgenden näher erläutert werden wird, lassen sich mehrere solcher Anordnungen bzw. Fügevorrichtungen 28 als Teilfügevorrichtungen **42** kollisionsfrei nebeneinander positionieren und als eine an unterschiedliche zu bearbeitende Baugruppen 10 (Fig. 1), beispielsweise unterschiedlicher Smartphones, anpassbare Fügevorrichtung 28 nutzen.

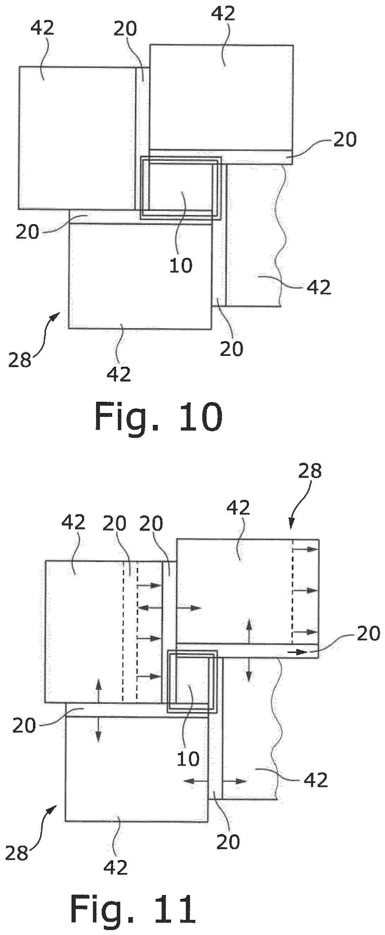

Dazu zeigen **Fig. 10** und **Fig. 11** eine derart anpassbare Ausführungsform einer Fügevorrichtung 28 und ihre Verwendung für zwei unterschiedlich große Baugruppen 10.

Zu erkennen ist, dass die gemäß Fig. 10 bzw. Fig. 11 zu bearbeitenden Baugruppen 10 jeweils rechteckig oder zumindest im Wesentlichen rechteckig sind.

Die Fügevorrichtung 28 weist vier Teilfügevorrichtungen 42 auf, die jeweils der Teilfügevorrichtung 42 gemäß Fig. 9, insbesondere mit der Lichtquelle 22, der Maskierungsvorrichtung 32 und der Spiegeleinheit 34, entsprechen. Die Fügevorrichtung 28 kann somit Licht 20 mit einem aus vier Streifen bestehenden Lichtbild erzeugen.

Jede Teilfügevorrichtung 42 und damit jeder Streifen des Lichts 20 lässt sich in jeweils einer Richtung verschieben. Wie in Fig. 11 mithilfe von Doppelpfeilen angedeutet, sind diese Richtungen jeweils senkrecht zueinander orientiert.

Dadurch, dass die Einzelspiegelflächen 40 (Fig. 9) bis an die jeweilige Kante K (Fig. 9) heranreichen, überstrahlt das Licht 20 mit seinen vier Streifen in jeder Stellung der Teilfügevorrichtungen 42 eine (zumindest nahezu) nahtlose, im Wesentlichen rechteckige, Ringfläche.

Somit lässt sich durch Verschieben der Teilfügevorrichtungen 42 und damit der Streifen des Lichts 20 das erzeugte Lichtbild in seiner Größe und Form auf die jeweils zu bearbeitende Baugruppe 10 anpassen.

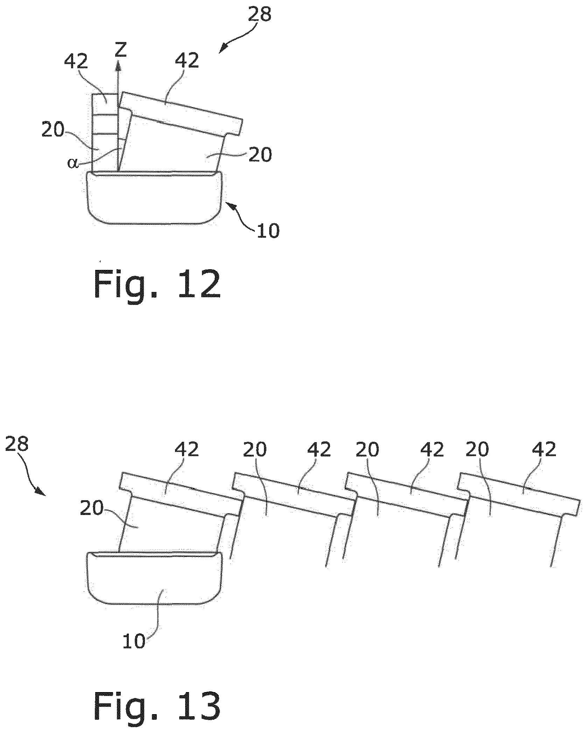

Eine solche Anpassbarkeit bei (nahezu) nahtloser Bestrahlung einer im Wesentlichen rechteckigen Ringfläche ermöglicht auch die in **Fig. 12** und **Fig. 13** dargestellte Ausführungsform einer Fügevorrichtung 28.

Diese Fügevorrichtung 28 weist wiederum vier Teilfügevorrichtungen 42 auf, die wiederum, insbesondere kollisionsfrei, parallel oder zumindest im Wesentlichen parallel zur Oberseite einer zu fügenden Baugruppe 10 verlagerbar angeordnet sind.

Fig. 12 zeigt dazu eine schematische Teil-Seitenansicht der Fügevorrichtung 28. Zur Vereinfachung sind in Fig. 12 lediglich zwei der vier Teilfügevorrichtungen 28 abgebildet. Fig. 13 zeigt eine schematische Abwicklungsansicht der Fügevorrichtung 28 mit den vier - hier abgewickelt dargestellten - Teilfügevorrichtungen 42.

Jede der Teilfügevorrichtungen 42 ist wiederum als Streifenlichtquelle ausgebildet und strahlt Licht 20 auf die Baugruppe 10. Im zusammengebautem Zustand, d. h. im der Abwicklungsansicht gemäß Fig. 13 zugrunde liegenden Ursprungszustand, sind die Teilfügevorrichtungen 42 wiederum entsprechend einer Draufsicht zueinander senkrecht angeordnet.

Zusätzlich sind die Teilfügevorrichtungen 28 - wie insbesondere Fig. 12 zu entnehmen ist - bei dieser Ausführungsform mit einem Neigewinkel α gegen die Richtung z geneigt, so dass bei einer Verlagerung einer der Teilfügevorrichtungen 28 eine Kollision mit einer anderen Teilfügevorrichtung 28 vermieden werden kann.

Wie beispielsweise auch der Fig. 12 entnehmbar ist, kann durch die Neigung um den Neigungswinkel α zudem erreicht werden, dass das Licht 20 eine (zumindest nahezu) nahtlose Fläche überstrahlt.

Bei dieser Fügevorrichtung 28 kann auf Spiegel innerhalb der Teilfügevorrichtungen verzichtet werden. Gegebenenfalls auftretende Intensitätsgradienten des Lichts 20, insbesondere an Rändern der jeweiligen Strahlengänge, können dabei durch geeignete Maskierungsvorrichtungen 32 (siehe z. B. Fig. 2) vermieden bzw. entfernt werden.

Die Fügevorrichtung 28 kann, insbesondere in den vorangehend dargestellten Ausführungsformen, wenigstens einen, insbesondere verformbaren, Fügestempel 24 (Fig. 1) aufweisen.

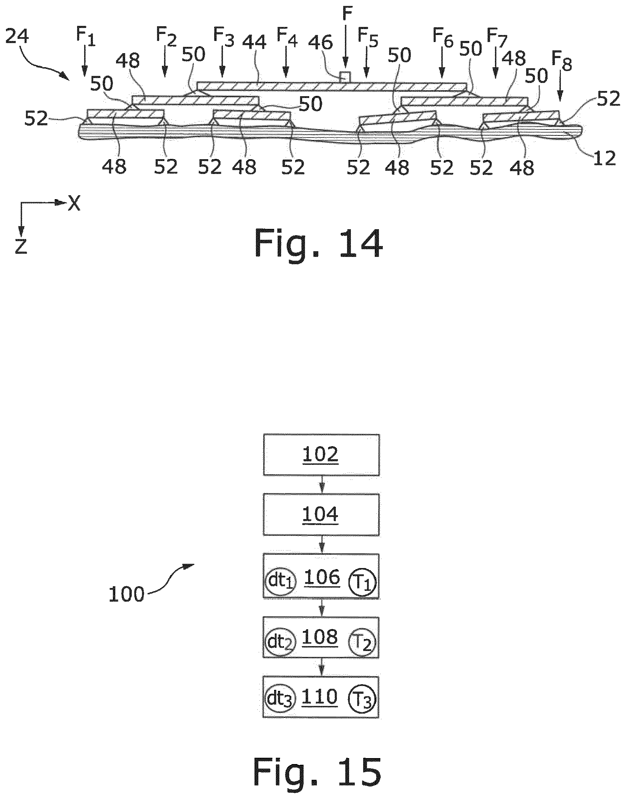

Einen solchen verformbaren Fügestempel 24 zeigt **Fig. 14** in schematischer Darstellung.

Der Fügestempel 24 weist ein mit der Anpresskraft F entlang einer zur Richtung x orthogonalen Richtung **z** beaufschlagbares Kraftaufnahmeteil **44** auf. Das Kraftaufnahmeteil 44 ist als Balken ausgebildet und weist in etwa mittig einen Kraftaufnahmepunkt **46** auf, auf den bei einem Fügevorgang die Anpresskraft F appliziert wird.

Unterhalb des Kraftaufnahmeteils 44 sind mehrere Lastleitteile **48** hierarchisch in mehreren Ebenen, in diesem Fall in zwei Ebenen, angeordnet. Auch die Lastleitteile 48 sind als Balken ausgebildet.

Die Lastleitteile 48 sind über Gelenkteile **50** am jeweils über ihnen befindlichen Element, d. h. an einem darüber befindlichen Lastleitteil 48 oder am Kraftaufnahmeteil 44, kippbeweglich angeordnet. Sie sind somit relativ zum Kraftaufnahmeteil 44 kippbeweglich am Fügestempel 24 angeordnet.

An den Lastleitteilen 48 der untersten Ebene sind jeweils zwei Anpressteile **52** angeordnet. Mit den Anpressteilen 52 kontaktiert der Fügestempel 28 in der Situation gemäß Fig. 14 das erste Fügeteil 12, das gegen das zweite Fügeteil 14 (Fig. 1) gepresst werden soll.

Durch die kippbeweglichen Anordnungen der Lastleitteile 48 sind die Anpressteile 52 zumindest unabhängig von den an den jeweils anderen Lastleitteilen 48 angeordneten Anpressteilen 52 relativ zum Kraftaufnahmeteil 44 kippbeweglich am Fügestempel 24 angeordnet. Denkbar ist, dass alternativ oder ergänzend die Anpressteile 52 unmittelbar kippbeweglich an den jeweiligen Lastleitteilen 48 der untersten Ebene angeordnet, insbesondere gelagert, sind.

Durch diese Kippbeweglichkeit ist der Fügestempel 24 verformbar. Er kann sich beim Gegeneinanderpressen der beiden Fügeteile 12, 14 insbesondere an die - unter Umständen auch durch den Fügevorgang selbst veränderte und gegebenenfalls unregelmäßige - Oberflächengeometrie des ersten Fügeteils 12 anpassen und somit eine gleichmäßiger verteilte bzw. einstellbar verteilte Einleitung der Anpresskraft F bzw. der erzeugten Anpressdrücke bewirken; die Verteilungen der Anpresskraft F bzw. der Anpressdrücke können dazu insbesondere durch Anpassungen in der Form und/oder den Abmessungen der Bestandteile des Fügestempels 24 eingestellt werden.

Zur Verdeutlichung sind in Fig. 14 Verformungen des ersten Fügeteils 12 während des Fügevorganges stark vergrößert dargestellt.

Zu erkennen ist, dass bei Beaufschlagung des Kraftaufnahmeteils 44 mit der Anpresskraft F die Anpressteile 52 jeweils mit Teilkräften F1 bis F8 an ihren jeweiligen Kontaktstellen auf das erste Fügeteil 12 pressen bzw. an dieses die jeweiligen Teilkräfte F1 bis F8 übertragen.

Durch die kippbeweglichen Anordnungen der Lastleitteile 48 können die Lastleitteile 48 derart verkippen, dass alle Anpressteile 52 trotz der Verformungen des ersten Fügeteils 12 auf diesem aufliegen. Somit wird ein gleichmäßiger Krafteintrag in das erste Fügeteil 12 ermöglicht.

Anhand von **Fig. 15** werden im Folgenden Schritte des erfindungsgemäßen Verfahrens **100** näher erläutert. Dazu wird wiederum zur Bezeichnung von Elementen der verwendeten Fügevorrichtung auf die Bezugszeichen der vorangehend beschriebenen Figuren zurückgegriffen.

In einem ersten Schritt **102** wird die zu bearbeitende Baugruppe 10 der Fügevorrichtung 28, die beispielsweise die Ausführungsform gemäß Fig. 10 und Fig. 11 aufweist, zugeführt. Insbesondere werden die Fügeteile 12, 14 mitsamt dem (thermosensitiven) Klebemittel 16 in die Fügevorrichtung 28 eingebracht und fixiert.

Mithilfe des bzw. der Fügestempel 24 wird in diesem Schritt 102 die erforderliche Anpresskraft F bzw. die erforderliche Druckverteilung aufgebaut.

Sodann wird in einem Schritt **104** die Maskierungsvorrichtung 32 eingerichtet, insbesondere eingestellt; insbesondere wird die Größe ihres Maskierungsfensters 33 auf die zu bearbeitende Baugruppe 10 angepasst. Alternativ oder ergänzend kann eine Einrichtung der Maskierungsvorrichtung 32 auch vorab, insbesondere während eines initialen Einrichtungsschrittes, erfolgen.

Weiterhin wird die Lichtverteilung bzw. die Abstrahlcharakteristik der Lichtquelle 22 angepasst. Die Anpassungen der Maskierungsvorrichtung 32 und/oder der Lichtverteilung der Lichtquelle 22 können beispielsweise analog dem in Fig. 10 bzw. 11 dargestellten Vorgehen erfolgen. Insbesondere können dazu ein oder mehrere Teilfügevorrichtungen 42 verlagert werden.

Ist das Klebemittel 16 ein LAK oder ein TAK, so muss dieses zunächst bis zu einer Benetzungstemperatur **T1** bzw. bis zu einer Schmelztemperatur erwärmt werden und diese Benetzungstemperatur **T1** über eine Benetzungsdauer **dt1** zumindest näherungsweise gehalten werden. Bei dieser Benetzungstemperatur T1 benetzt das Klebemittel zunächst die beiden ihm benachbarten Fügeteile 12, 14.

Damit bei einem als TAK ausgebildeten Klebemittel 16 die zur Ausbildung der Fügeverbindungseigenschaften erforderlichen chemischen Reaktionen ausgelöst werden bzw. stattfinden, muss ein solches Klebemittel 16 anschließend bis auf eine Reaktionstemperatur **T2** erhitzt werden. Die Reaktionstemperatur T2 ist anschließend über eine Reaktionsdauer **dt2** zumindest näherungsweise zu halten. Danach wird das Klebemittel 16 über eine Abkühldauer **dt3** auf eine Entnahmetemperatur **T3** abgekühlt.

Die Temperaturen T1, T2, T3 sowie die Dauern dt1, dt2, dt3 werden dazu insbesondere in Abhängigkeit der verwendeten Materialien, insbesondere des Klebemittels 16 und/oder der Fügeteile 12, 14, gewählt.

In einem Schritt **106** wird daher die Lichtquelle 22 kurzzeitig mit hoher Leistung bzw. Intensität betrieben und damit das Klebemittel 16 mittelbar durch Bestrahlen der Farbstoffschicht 18 mit Licht 20 erwärmt, bis das Klebemittel 16 die Benetzungstemperatur T1 erreicht. Beispielsweise wird eine Intensität von ca. 1 W/mm² erzeugt. Nach Erreichen der Benetzungstemperatur T1 wird die Leistung bzw. Intensität der Lichtquelle 22 temporär reduziert, um die Benetzungstemperatur T1 über die Benetzungsdauer dt1 zumindest näherungsweise zu halten.

Im Falle, dass das Klebemittel 16 ein TAK ist, wird während eines nächsten Schrittes **108,** die Lichtquelle 22 erneut verwendet, bis das Klebemittel 16 die Reaktionstemperatur T2 erreicht. Insbesondere kann dazu die Lichtquelle 22 mit einer erhöhten Leistung betrieben werden. Diese erhöhte Leistung bzw. Intensität wird wiederum über einen vergleichsweise kurzen Zeitraum verwendet. Sodann wird die Leistung bzw. Intensität der Lichtquelle 22 erneut reduziert, um die Reaktionstemperatur T2 über die Reaktionsdauer dt2 zumindest näherungsweise zu halten. Währenddessen werden mittels des Fügestempels 24 die beiden Fügeteile 12, 14 weiter gegeneinandergepresst bzw. wird die Anpresskraft F weiter aufrechterhalten.

Ist das Klebemittel 16 ein Thermoplast, beispielsweise ein LAK, kann Schritt 108 entfallen und das Verfahren unmittelbar bei Schritt 110 fortgesetzt werden.

Abschließend wird in einem letzten Schritt **110** über die Abkühldauer dt3 die Temperatur von der Reaktionstemperatur T2 auf die Entnahmetemperatur T3 verringert. Die Baugruppe 10 kann dann der Fügevorrichtung 28 entnommen und beispielsweise weiterverarbeitet werden.

Bei einer Verfahrensvariante kann vorgesehen sein, dass mehrere Verfahrensschritte, insbesondere die Verfahrensschritte 106 und 108 nicht auf der gleichen Fügevorrichtung 28 und/oder zumindest nicht mittels der gleichen Lichtquelle 22 ausgeführt werden, sondern dass mehrere Fügevorrichtungen 28 und/oder unterschiedliche Lichtquellen 22 verwendet werden. Beispielsweise kann ein Aufheizen auf die Temperaturen T1 und/oder T2 alternativ zu einer als Flächenstrahler gebildeten Lichtquelle 22 durch einen Laser bzw. einen Laserscanner erfolgen.

Weiter ist denkbar, dass zum Halten einer Temperatur, insbesondere der Benetzungstemperatur T1 und/oder der Reaktionstemperatur T2, anstelle oder ergänzend zu einer reduzierten Leistungszufuhr durch die Lichtquelle 22 eine thermische Isolation und/oder eine Zufuhr thermischer Energie von außen, beispielsweise über den Werkstückträger 26 und/oder den Fügestempel 24, vorgesehen wird.

Weiter ist eine Fügevorrichtung 28 denkbar, die eingerichtet ist, mehr als eine Baugruppe 10 bzw. mehr als ein Paar miteinander zu verbindender Fügeteile 12, 14 zu fügen. In Verbindung mit einer solchen Fügevorrichtung 28 besteht eine Variante des erfindungsgemäßen Verfahrens 100 darin, zeitgleich oder alternierend mehrere Baugruppen 10 bzw. Paare von miteinander zu verbindenden Fügeteilen 12, 14 zu fügen.

### Bezugszeichenliste

- 10: Baugruppe
- 12: Fügeteil
- 14: Fügeteil
- 16: Klebemittel
- 18: Farbstoffschicht
- 19: Fügezone
- 20: Licht
- 22: Lichtquelle
- 24: Fügestempel
- 26: Werkstückträger
- 28: Fügevorrichtung
- 30: Linsenanordnung
- 32: Maskierungsvorrichtung
- 33: Maskierungsfenster
- 34: Spiegelvorrichtung
- 36: Einzellichtquelle
- 40: Einzelspiegelfläche
- 42: Teilfügevorrichtung
- 44: Kraftaufnahmeteil
- 46: Kraftaufnahmepunkt
- 48: Lastleitteil
- 50: Gelenkteil
- 52: Anpressteil

- 100: Verfahren
- 102: Schritt
- 104: Schritt
- 106: Schritt
- 108: Schritt
- 110: Schritt

- dt1: Benetzungsdauer
- dt2: Reaktionsdauer
- dt3: Abkühldauer
- F: Anpresskraft
- F1 bis F11: Teilkraft
- K: Kante
- T1: Benetzungstemperatur
- T2: Reaktionstemperatur
- T3: Entnahmetemperatur
- x: Richtung
- z: Richtung

- α: Neigewinkel

## Patentansprüche

1. **Verfahren** (100) zum Fügen eines ersten Fügeteils (12), insbesondere eines Deckglases, mit einem zweiten Fügeteil (14), insbesondere einem Gehäuse und/oder einer Anzeigeschicht einer Deckglas-Display-Baugruppe,
- wobei die beiden Fügeteile (12, 14) mittels eines thermosensitiven Klebemittels (16) miteinander verbunden werden und
- wobei das Klebemittel (16) mittelbar und/oder unmittelbar durch Bestrahlen mit Licht (20) einer Lichtquelle (22), insbesondere mit Infrarotlicht und/oder sichtbarem Licht, zur Herstellung der Fügeverbindung erwärmt wird,
- wobei als Lichtquelle (22) ein Flächenstrahler verwendet wird.

2. Verfahren nach Anspruch 1, **dadurch gekennzeichnet, dass** das erste Fügeteil (12), das zweite Fügeteil (14) und/oder deren Fügezone (19) mit Licht (20) mit einer Lichtintensität, insbesondere als Pulsspitzenintensität ermittelt, von höchstens 10 W/mm², vorzugsweise von höchstens 1 W/mm², bestrahlt werden.

3. Verfahren nach einem der vorhergehenden Ansprüche, **dadurch gekennzeichnet, dass** als Klebemittel (16) ein Thermoplast, ein Stoff mit vernetzenden Bestandteilen und/oder ein einen solchen Stoff aufweisender Klebstoff verwendet werden.

4. Verfahren nach einem der vorhergehenden Ansprüche, **dadurch gekennzeichnet, dass** eine das Licht (20) absorbierende oder zumindest teilweise absorbierende Farbstoffschicht (18), insbesondere zur Erwärmung des Klebemittels (16), bestrahlt wird.

5. Verfahren nach einem der vorhergehenden Ansprüche, **dadurch gekennzeichnet, dass** als Lichtquelle (22) wenigstens zwei Einzellichtquellen (36), beispielsweise wenigstens zwei LED, verwendet werden.

6. Verfahren nach einem der vorhergehenden Ansprüche, **dadurch gekennzeichnet, dass** als Lichtquelle (22) eine Matrixlichtquelle, insbesondere ein VCSEL-Array, verwendet wird.

7. Verfahren nach einem der vorhergehenden Ansprüche, **dadurch gekennzeichnet, dass** das Licht (20) entlang seines Strahlengangs durch eine Maskierungsvorrichtung (32) maskiert wird.

8. Verfahren nach dem vorhergehenden Anspruch, **dadurch gekennzeichnet, dass** die Größe und/oder die Position eines Maskierungsfensters (33) der Maskierungsvorrichtung (32) eingestellt werden.

9. Verfahren nach einem der vorhergehenden Ansprüche, **dadurch gekennzeichnet, dass** der Strahlengang des Lichts (20) durch eine Linsenanordnung (30) und/oder durch eine Spiegelvorrichtung (34) geformt und/oder gelenkt wird.

10. Verfahren nach einem der vorhergehenden Ansprüche, **dadurch gekennzeichnet, dass** wenigstens einer, vorzugsweise jeder, Einzellichtquelle (36) ein Teil und/oder ein Abschnitt der Linsenanordnung (30) und/oder der Spiegelanordnung (34) zugeordnet werden.

11. Verfahren nach einem der vorhergehenden Ansprüche, **dadurch gekennzeichnet, dass** die Lichtquelle (22) während des Fügens in wenigstens zwei verschiedenen Leistungsstufen betrieben wird.

12. Verfahren nach einem der vorhergehenden Ansprüche, **dadurch gekennzeichnet, dass** wenigstens eine Einzellichtquelle (36) mit einer höheren Einzellichtleistung betrieben wird als wenigstens eine andere Einzellichtquelle (36).

13. Verfahren nach einem der vorhergehenden Ansprüche, **dadurch gekennzeichnet, dass** die beiden Fügeteile (12, 14) vor, während und/oder nach dem Bestrahlen mit Licht (20), insbesondere mit einem Fügestempel (24), besonders bevorzugt mit einem verformbaren Fügestempel (24), gegeneinander gepresst werden.

14. **Fügevorrichtung (28),** insbesondere zur Durchführung des Verfahrens (100) nach einem der vorhergehenden Ansprüche, zum Fügen eines ersten Fügeteils (12), insbesondere eines Deckglases, mit einem zweiten Fügeteil (14), insbesondere einem Gehäuse und/oder einer Anzeigeschicht einer Deckglas-Display-Baugruppe, mittels eines thermosensitiven Klebemittels (16),
- mit einer Lichtquelle (22) zum unmittelbaren und/oder mittelbaren Erwärmen des Klebemittels (16) durch Bestrahlen des Klebemittels (16) mit Licht, insbesondere mit Infrarot-und/oder sichtbarem Licht,
- wobei die Lichtquelle (22) als Flächenstrahler, insbesondere als VCSEL-Array, ausgebildet ist.

15. Fügevorrichtung nach dem vorhergehenden Anspruch, **dadurch gekennzeichnet, dass** die Fügevorrichtung (28) einen, insbesondere verformbaren, Fügestempel (24) zum Gegeneinanderpressen der beiden Fügeteile (12, 14) aufweist.
